# FASCICULE DE BREVET EUROPEEN

(11) **EP 1 829 152 B1**
(45) Date de publication et mention de la délivrance du brevet: **10.07.2013**
(21) Numéro de dépôt: 05825972.2
(22) Date de dépôt: 14.12.2005
(51) Int. Cl.: H01M 10/44

(54) **PROCEDE POUR MAINTENIR UN ACCUMULATEUR AU PLOMB CHARGE**
VERFAHREN ZUR AUFRECHTERHALTUNG DES GELADENEN ZUSTANDES EINES BLEI-AKKUMULATOR
METHOD FOR MAINTAINING THE CHARGE OF A LEAD STORAGE BATTERY

(30) Priorité: 14.12.2004 FR 0413283
(43) Date de publication de la demande: 05.09.2007
(73) Titulaire: Electricité de France, Société Anonyme, 75008 Paris (FR)
(72) Inventeur: ALZIEU, Jean, F-77250 Moret sur Loing (FR); DILLENSEGER, Guillaume, 97490 Sainte-Clothilde, La Réunion (FR)
(74) Mandataire: Cabinet Plasseraud
(86) Numéro de dépôt international: PCT/FR2005/003130
(87) Numéro de publication internationale: WO 2006/064125

(56) Documents cités:
- EP-A- 0 689 273
- EP-A- 0 913 288
- DE-A1- 19 833 096

## Description

L'invention vise à apporter une amélioration aux techniques existantes destinées à maintenir un élément d'accumulateur au plomb chargé.

Elle a plus particulièrement pour objet d'allonger la durée de vie de l'élément d'accumulateur. Elle s'applique en particulier aux batteries d'éléments d'accumulateur au plomb ouverts et à recombinaison de gaz.

Les éléments d'accumulateur au plomb sont couramment utilisés, comme source d'énergie de secours, dans les d'application qui souhaitent se prémunir contre toute coupure énergétique. Une description détaillée de tels éléments d'accumulateur au plomb est fournie par US-A-4 931 367.

Stockée dans des batteries d'éléments d'accumulateur, l'énergie de secours doit être entretenue. En effet, les éléments d'accumulateur sont le siège de phénomènes d'autodécharge qui, bien que faibles, doivent être compensés pour maintenir la batterie d'éléments d'accumulateur dans un état chargé (pleine capacité).

Une technique classique de maintien de l'état chargé est connue sous le nom de "floating" et consiste à compenser les phénomènes d'autodécharge des éléments d'accumulateur en imposant à la batterie d'éléments d'accumulateur une tension supérieure à sa tension de circuit ouvert (surtension de l'ordre de 100 à 150mV par élément d'accumulateur).

Toutefois, l'application de cette tension génère une consommation d'eau fonction de la quantité d'électricité globalement fournie pour maintenir l'état chargé. Pour réduire la consommation d'eau et donc les interventions de maintenance destinées à compléter le niveau d'eau de la batterie d'éléments d'accumulateur, il est usuellement connu d'utiliser des batteries d'éléments d'accumulateur à recombinaison de gaz.

Mais, cette technique de "floating" ne permet malgré tout guère d'espérer une durée de vie des batteries d'éléments d'accumulateur à recombinaison de gaz supérieure à 4 à 5 années, notamment en ambiance chaude.

Les batteries à recombinaison de gaz sont particulièrement sensibles à l'environnement thermique (beaucoup plus que les batteries ouvertes) et à un risque d'emballement thermique : lorsque la température augmente alors que la surtension appliquée selon la technique de "floating" est constante, les cinétiques des réactions augmentent, la résistance de polarisation diminue, le courant de floating augmente, davantage d'oxygène est alors recombiné (réaction exothermique de combustion) sur l'électrode négative, contribuant à l'élévation de la température au sein de l'élément d'accumulateur, et ainsi de suite. La température interne peut, selon les conditions d'échange avec l'extérieur, converger vers une valeur d'équilibre induisant simplement un vieillissement plus rapide de la batterie, ou diverger : on observe alors un emballement thermique avec destruction de la batterie.

Ainsi, sous les mêmes contraintes thermiques, une batterie à recombinaison de gaz vieillit plus rapidement qu'une batterie ouverte et risque même un emballement thermique.

Pour atténuer à la fois les risques d'emballement thermique et d'élévation de la température interne de fonctionnement, typique aux éléments d'accumulateur à recombinaison de gaz, une solution est connue sous l'expression "technique intermittente" ou "ON/OFF". Cette technique décrite notamment dans US-A-5 229 650 consiste à n'appliquer la surtension de floating que par intermittence. La batterie est laissée en circuit ouvert pendant un temps donné (quelques secondes, quelques heures ou quelques semaines). Elle perd par conséquent par autodécharge une fraction de sa capacité. Elle revient ensuite à une valeur plus élevée d'état de charge lors d'une phase de charge durant laquelle la tension de floating lui est appliquée.

Toutefois, une telle technique intermittente présente un problème de rechargeabilité. En effet, pendant les périodes en circuit ouvert (quelques semaines à quelques mois), les électrodes positives des éléments d'accumulateur s'autodéchargent plus vite que les négatives. Pendant les périodes de charge qui suivent, les électrodes négatives des éléments d'accumulateur atteignent donc l'état de pleine charge avant les électrodes positives. On observe alors une brusque polarisation des électrodes négatives et il en résulte une chute de l'intensité du courant de charge à un niveau qui ne permet plus de recharger les électrodes positives dans le temps imparti (quelques heures à quelques jours) qui doit rester faible vis à vis des périodes en circuit ouvert. Il en résulte un déséquilibre d'état de charge entre les électrodes positives et négatives, effet cumulatif au long des cycles (circuit ouvert / floating), qui réduit progressivement la capacité utilisable de la batterie.

Pour résoudre les problèmes précités, conformément à l'invention, comme indiqué dans la revendication 1, il est préconisé de :
- utiliser un élément d'accumulateur au plomb présentant une capacité ayant une valeur nominale et une source d'électricité apte à délivrer un niveau bas et un niveau haut d'électricité, les niveaux bas et haut étant non nuls et le niveau haut étant supérieur au niveau bas, ledit élément d'accumulateur présentant un état de charge correspondant au rapport entre la capacité de l'élémènt d'accumulateur et la capacité maximale admissible par l'élément d'accumulateur à un instant donné, ledit état de charge présentant une valeur maximale lorsque l'élément d'accumulateur est chargé,
- pendant une phase de conservation, soumettre l'élément d'accumulateur au niveau bas d'électricité délivré par la source d'électricité, ledit niveau bas d'électricité étant insuffisant pour maintenir l'état de charge de l'élément d'accumulateur à sa valeur maximale,
- pendant une phase de charge, soumettre l'élément d'accumulateur au niveau haut d'électricité délivré par la source d'électricité, ledit niveau haut d'électricité étant suffisant pour augmenter l'état de charge de l'élément d'accumulateur jusqu'à sa valeur maximale,
- effectuer en alternance des phases de conservation et des phases de charge, afin de maintenir l'état de charge de l'élément d'accumulateur sensiblement à sa valeur maximale.

Ainsi, on parvient à allonger la durée de vie des éléments d'accumulateur au plomb du type à recombinaison de gaz et du type ouvert. En effet, pendant les phases de conservation, l'électricité fournie à l'élément d'accumulateur est plus faible que selon la technique de "floating", puisqu'elle n'est pas suffisante pour maintenir l'état de charge de l'élément d'accumulateur à sa valeur maximale. Le risque d'emballement thermique et les pertes d'eau de l'électrolyte de l'accumulateur sont par conséquent réduits pendant cette phase par rapport à la technique de "floating". L'autodécharge des éléments d'accumulateur étant relativement faible en raison de l'électricité fournie à l'élément d'accumulateur pendant les phases de conservation, le risque d'emballement thermique et les pertes d'eau de l'électrolyte de l'accumulateur pendant les phases de charges sont faibles.

En outre, il apparaît que l'invention améliore un autre facteur intervenant dans la durée de vie des éléments d'accumulateur, à savoir la corrosion des grilles des électrodes positives, et ce pour des éléments d'éléments d'accumulateur au plomb du type à recombinaison de gaz ou de type ouvert. Le processus de corrosion présente un caractère qui s'apparente à un phénomène de passivation et présente une vitesse fonction de la différence de potentiel appliquée à l'élément d'accumulateur ayant un minimum situé entre la différence de potentiel appliquée selon la technique de "floating" et la différence de potentiel entre les bornes de l'élément d'accumulateur en circuit ouvert, tel qu'indiqué notamment dans US-A-4 931 367. Conformément à l'invention, pendant les phases de conservation on applique une différence de potentiel comprise entre les deux différences de potentiel précitées et on induit par conséquent une moindre corrosion des électrodes positives des éléments d'accumulateur.

Selon une caractéristique conforme à l'invention, on contrôle le niveau bas d'électricité en contrôlant l'intensité de courant électrique auquel est soumis l'élément d'accumulateur.

En effet, la force électromotrice de l'élément d'accumulateur, autrement dit le potentiel entre les bornes de l'élément d'accumulateur en circuit ouvert, étant variable en fonction de son état de charge et l'énergie fournie à l'élément d'accumulateur étant relativement faible, cette dernière est plus précisément contrôlée en contrôlant l'intensité du courant électrique auquel est soumis l'élément d'accumulateur qu'en contrôlant sa tension.

Avantageusement, pendant les phases de conservation, on soumet l'élément d'accumulateur à un courant compris entre 2.10⁻⁵ fois et 2.10⁻⁴ fois la valeur nominale de la capacité de l'élément d'accumulateur, avec le courant exprimé en Ampère et la capacité de l'élément d'accumulateur exprimée en Ampère.Heure.

Ainsi, la vitesse de corrosion des électrodes positives est proche de son minimum et l'autodécharge de l'élément d'accumulateur est faible.

En outre, selon une caractéristique complémentaire conforme à l'invention, pendant les phases de charge, on soumet l'élément d'accumulateur à un courant compris entre 10⁻³ fois et 4.10⁻³ fois la valeur nominale de la capacité de l'élément d'accumulateur, avec le courant exprimé en Ampère et la capacité de l'élément d'accumulateur exprimée en Ampère.Heure.

Ainsi, lors des phases de charge, d'une part la corrosion des électrodes positives n'est pas trop conséquente et d'autre part le risque d'emballement thermique et les pertes d'eau de l'électrolyte de l'accumulateur sont très faibles.

Selon une autre caractéristique conforme à l'invention, on effectue chaque phase de conservation pendant une durée comprise entre 1 mois et 24 mois.

Ainsi, d'une part l'autodécharge de l'élément d'accumulateur n'est pas trop sensible et d'autre part les phases de charge ne sont ni trop fréquentes ni trop longues afin de réduire la présence de conditions engendrant un risque de dégradation de l'élément d'accumulateur.

Ces caractéristiques sont encore améliorées selon l'invention, en effectuant chaque phase de charge pendant une durée comprise entre 6 heures et 15 jours.

De préférence, conformément à l'invention, on effectue chaque phase de conservation pendant une durée comprise entre 3 mois et 18 mois et chaque phase de charge pendant une durée comprise entre 1 jour et 10 jours.

D'autres particularités et avantages de la présente invention apparaîtront dans la description ci-après d'un exemple de réalisation non limitatif, en référence aux dessins annexés dans lesquels :
- la figure 1 illustre une source permanente d'alimentation comprenant un élément d'accumulateur et fonctionnant selon un procédé conforme à l'invention,
- la figure 2 illustre les variations du courant fourni à l'élément d'accumulateur et de l'état de charge de l'élément d'accumulateur en fonction du temps.

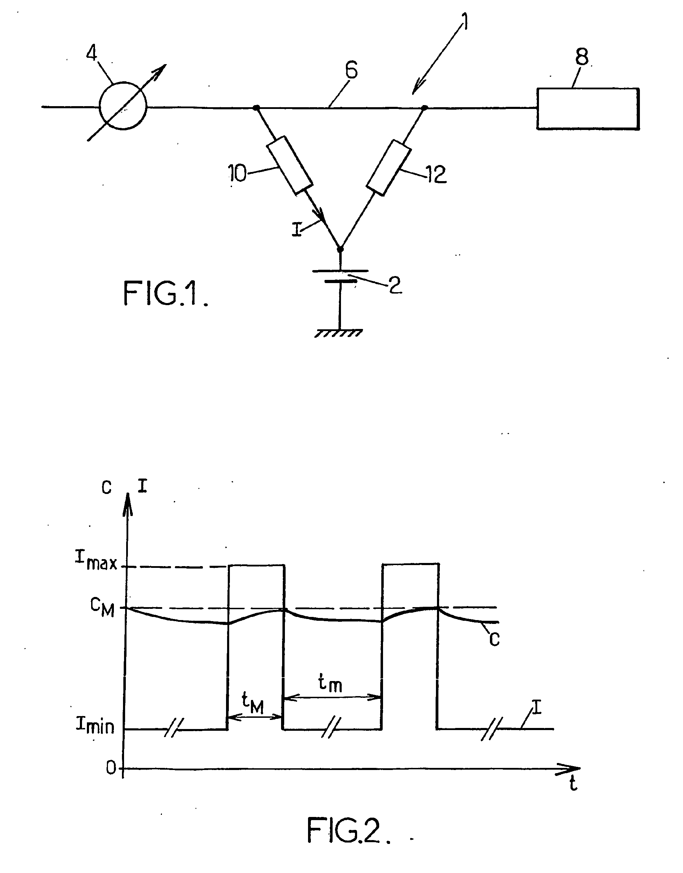

La figure 1 illustre une source permanente de courant 1 alimentant une charge 8 par l'intermédiaire d'une ligne d'alimentation 6. La source permanente de courant comprend un chargeur 4 alimentant la ligne d'alimentation 6 en une tension continue de niveau variable, une batterie 2 d'éléments d'accumulateur de secours au plomb, des moyens de contrôle 10 de l'alimentation de la batterie 2 reliant la batterie 2 à la ligne d'alimentation 6 et un dispositif de contrôle 12 de l'alimentation de la ligne d'alimentation 6 par la batterie 2.

Le dispositif de contrôle 10 de l'alimentation de la batterie 2 en courant I comprend des moyens de contrôle du niveau de l'intensité électrique I délivrée à la batterie 2.

Le dispositif de contrôle 12 de l'alimentation de la ligne d'alimentation 6 par la batterie 2 comprend une diode ou équivalent.

Tel qu'illustré à la figure 2, le courant I auquel est soumise la batterie alterne, au cours du temps t, des phases de durée t_{M} pendant lesquelles le courant I est de valeur constante égale à I_{Max} et des phases de durée tₘ pendant lesquelles le courant I est de valeur constante égale à Iₘᵢₙ.

De manière optimale, la durée tₘ est comprise entre 6 et 12 mois, la durée t_{M} est comprise entre 3 et 4 jours et les courants I_{M} et Iₘ sont tels que :
I_{M} = K_{M} x C_{N} et Iₘ = Kₘ X C_{N} , où :
   K_{M} = 2.10⁻³.h⁻¹
   Kₘ = 5.10⁻⁵.h⁻¹

C_{N} est la capacité nominale de chaque élément d'accumulateur de la batterie 2 exprimée en Ampère.Heure (A.h).

Pendant la phase où le courant I est égal à Iₘᵢₙ, l'état de charge C de la batterie décroît légèrement à partir de sa valeur maximale C_{M} et pendant la phase où le courant est égal à I_{MAX}, l'état de charge C de la batterie tend en croissant jusqu'à la valeur maximale C_{M} sensiblement égale à 1. L'état de charge est égal à la capacité de la batterie divisée par la capacité maximale admissible par la batterie à un instant donné. En effet, au cours de la vie d'une batterie sa capacité maximale admissible décroît progressivement sensiblement depuis la valeur nominale.

La tension aux bornes de chaque élément d'accumulateur de la batterie 2 correspondant au courant I_{M} est avantageusement sensiblement supérieure de 150 mV à 200 mV à la force électromotrice de l'élément d'accumulateur (potentiel entre les bornes de l'élément d'accumulateur en circuit ouvert), lorsqu'il est à son état de charge maximal, tandis que la tension aux bornes de la batterie 2 correspondant au courant Iₘ sera sensiblement supérieure de 20 mV à 60 mV à la force électromotrice de l'élément d'accumulateur lorsqu'il est à son état de charge maximal.

Les deux niveaux I_{M} et Iₘ du courant I auxquels la batterie est soumise est fonction du niveau de tension du chargeur 4 et contrôlé par les moyens de contrôle 10 de l'alimentation de la batterie 2.

En cas d'utilisation de la batterie d'élément d'accumulateur 2 pour fournir de l'électricité en secours à des utilisateurs, de manière classique, on charge la batterie jusqu'à la valeur maximale de son état de charge sous un courant dont la valeur initiale exprimée en Ampère est de préférence comprise entre 0,1 fois et 0,5 fois la capacité nominale de la batterie d'éléments d'accumulateurs exprimée en Ampère.Heure.

Bien entendu, l'invention n'est nullement limitée au mode de réalisation qui vient d'être décrit à titre d'exemple non limitatif. Ainsi, le chargeur 4 pourrait avoir un niveau de tension constant, les variations de niveau du courant I étant commandé par les moyens de contrôle 10 de l'alimentation de la batterie 2.

## Revendications

1. Procédé pour maintenir un élément d'accumulateur (2) au plomb chargé, dans lequel :
- on utilise un élément d'accumulateur (2) au plomb présentant une capacité ayant une valeur nominale et une source d'électricité (4, 10) apte à délivrer un niveau bas (Iₘ) et un niveau haut (I_{M}) d'électricité (I), les niveaux bas (Iₘ) et haut (I_{M}) étant non nuls et le niveau haut (I_{M}) étant supérieur au niveau bas (Iₘ), ledit élément d'accumulateur présentant un état de charge correspondant au rapport entre la capacité de l'élément d'accumulateur et la capacité maximale admissible par l'élément d'accumulateur à un instant donné, ledit état de charge présentant une valeur maximale lorsque l'élément d'accumulateur est chargé,
- pendant une phase de conservation, on soumet l'élément d'accumulateur au niveau bas (Iₘ) d'électricité délivré par la source d'électricité (4, 10), ledit niveau bas (Iₘ) d'électricité étant insuffisant pour maintenir l'état de charge (C) de l'élément d'accumulateur à sa valeur maximale (C_{M}),
- pendant une phase de charge, on soumet l'élément d'accumulateur au niveau haut d'électricité délivré par la source d'électricité (4, 10), ledit niveau haut (I_{M}) d'électricité étant suffisant pour augmenter l'état de charge (C) de l'élément d'accumulateur jusqu'à sa valeur maximale (C_{M}),
- on effectue en alternance des phases de conservation et des phases de charge, afin de maintenir l'état de charge de l'élément d'accumulateur sensiblement à sa valeur maximale.

2. Procédé selon la revendication 1, **caractérisé en ce que** l'on effectue chaque phase de conservation pendant une durée (tₘ) comprise entre 1 mois et 24 mois.

3. Procédé selon la revendication 1 ou la revendication 2, **caractérisé en ce que** l'on effectue chaque phase de charge pendant une durée (t_{M}) comprise entre 6 heures et 15 jours.

4. Procédé selon la revendication 3 lorsqu'elle dépend de la revendication 2, **caractérisé en ce que** l'on effectue chaque phase de conservation pendant une durée (tₘ) comprise entre 3 mois et 18 mois et chaque phase de charge pendant une durée comprise (t_{M}) entre 1 jour et 10 jours.

5. Procédé selon l'une quelconque des revendications précédentes, **caractérisé en ce que** l'on contrôle le niveau bas d'électricité en contrôlant l'intensité (I) de courant électrique auquel est soumis l'élément d'accumulateur (2).

6. Procédé selon l'une quelconque des revendications précédentes, **caractérisé en ce que**, pendant les phases de conservation, on soumet l'élément d'accumulateur à un courant (Iₘᵢₙ) compris entre 2.10⁻⁵ fois et 2.10⁻⁴ fois la valeur nominale de la capacité de l'élément d'accumulateur (2), avec le courant (I) exprimé en Ampère (A) et la capacité de l'élément d'accumulateur exprimée en Ampère.Heure (A.h).

7. Procédé selon la revendication 6, **caractérisé en ce que**, pendant les phases de charge, on soumet l'élément d'accumulateur à un courant (I) compris entre 10⁻³ fois et 4.10⁻³ fois la valeur nominale de la capacité de l'élément d'accumulateur (2), avec le courant (I) exprimé en Ampère (A) et la capacité de l'élément d'accumulateur exprimée en Ampère.Heure (A.h).

## Patentansprüche

1. Verfahren zur Aufrechterhaltung des geladenen Zustandes eines Bleiakkumulators (2), bei dem:
- ein Bleiakkumulator (2) mit einer Kapazität, die einen Nominalwert hat, und einer Elektrizitätsquelle (4, 10), die geeignet ist, ein niedriges Niveau (Iₘ) und ein hohes Niveau (I_{M}) an Elektrizität (I) zu liefern, verwendet wird, wobei die niedrigen (Iₘ) und hohen (I_{M}) Niveaus ungleich null sind und das hohe Niveau (I_{M}) höher als das niedrige Niveau (Iₘ) ist, wobei der Akkumulator einen Ladungszustand aufweist, der dem Verhältnis zwischen der Kapazität des Akkumulators und der vom Akkumulator maximal zulässigen Kapazität zu einem gegebenen Zeitpunkt entspricht, wobei der Ladungszustand einen Maximalwert aufweist, wenn der Akkumulator geladen ist,
- während einer Erhaltungsphase der Akkumulator dem niedrigen Elektrizitätsniveau (Iₘ), das von der Elektrizitätsquelle (4, 10) geliefert wird, ausgesetzt wird, wobei das niedrige Elektrizitätsniveau (Iₘ) nicht ausreicht, um den Ladungszustand (C) des Akkumulators auf seinem Maximalwert (C_{M}) zu halten,
- während einer Ladephase der Akkumulator dem hohen Elektrizitätsniveau, das von der Elektrizitätsquelle (4, 10) geliefert wird, ausgesetzt wird, wobei das hohe Elektrizitätsniveau (I_{M}) ausreicht, um den Ladungszustand (C) des Akkumulators auf seinen Maximalwert (C_{M}) zu erhöhen,
- alternierend Erhaltungsphasen und Ladephasen durchgeführt werden, um den Ladungszustand des Akkumulators im Wesentlichen auf seinem Maximalwert zu halten.

2. Verfahren nach Anspruch 1, **dadurch gekennzeichnet, dass** jede Erhaltungsphase während einer Dauer (tₘ) zwischen 1 Monat und 24 Monaten durchgeführt wird.

3. Verfahren nach Anspruch 1 oder Anspruch 2, **dadurch gekennzeichnet, dass** jede Ladephase während einer Dauer (t_{M}) zwischen 6 Stunden und 15 Tagen durchgeführt wird.

4. Verfahren nach Anspruch 3, wenn er von Anspruch 2 abhängig ist, **dadurch gekennzeichnet, dass** jede Erhaltungsphase während einer Dauer (tₘ) zwischen 3 Monaten und 18 Monaten und jede Ladephase während einer Dauer (t_{M}) zwischen 1 Tag und 10 Tagen durchgeführt wird.

5. Verfahren nach einem der vorhergehenden Ansprüche, **dadurch gekennzeichnet, dass** das niedrige Elektrizitätsniveau kontrolliert wird, indem die Stromstärke (I), der der Akkumulator (2) ausgesetzt ist, kontrolliert wird.

6. Verfahren nach einem der vorhergehenden Ansprüche, **dadurch gekennzeichnet, dass** während der Erhaltungsphasen der Akkumulator einen Strom (Iₘᵢₙ) zwischen 2.10⁻⁵-mal und 2.10⁻⁴-mal den Nominalwert der Kapazität des Akkumulators (2) ausgesetzt wird, wobei der Strom (I) in Ampere (A) und die Kapazität des Akkumulators in Ampere.Stunde (A.h) ausgedrückt werden.

7. Verfahren nach Anspruch 6, **dadurch gekennzeichnet, dass** während der Ladephasen der Akkumulator einem Strom (I) zwischen 10⁻³-mal und 4.10⁻³-mal den Nominalwert der Kapazität des Akkumulators (2) ausgesetzt wird, wobei der Strom (I) in Ampere (A) und die Kapazität des Akkumulators in Ampere.Stunde (A.h) ausgedrückt werden.

## Claims

1. Method of maintaining the charge of a lead storage element (2), whereby:
- a lead storage element (2) having a capacity with a nominal value and an electricity source (4, 10) suitable for supplying a low level (Iₘ) and a high level (I_{M}) of electricity (I) are used, the low (Iₘ) and high (I_{M}) levels being not zero and the high level (I_{M}) being higher than the low level (Iₘ), said storage element having a charge state corresponding to the ratio between the capacity of the storage element and the maximum capacity admissible by the storage element at a given instant, said charge state having a maximum value when the storage element is charged,
- during a conservation phase, the storage element is subjected to the low level (Iₘ) of electricity supplied by the electricity source (4, 10), said low level (Iₘ) of electricity being insufficient to maintain the charge state (C) of the storage element at its maximum value (C_{M}),
- during a charging phase, the storage element is subjected to the high electricity level supplied by the electricity source (4, 10), said high level (I_{M}) of electricity being sufficient to increase the charge state (C) of the storage element up to its maximum value (C_{M}),
- the conservation phases and charging phases are alternated in order to maintain the charge state of the storage element substantially at its maximum value.

2. Method as claimed in claim 1, **characterised in that** each conservation phase is run for a period (tₘ) of between 1 month and 24 months.

3. Method as claimed in claim 1 or claim 2, **characterised in that** each charging phase is run for a period (t_{M}) of between 6 hours and 15 days.

4. Method as claimed in claim 3 and dependent on claim 2, **characterised in that** each conservation phase is run for a period (tₘ) of between 3 months and 18 months and each charging phase is run for a period (t_{M}) of between 1 day and 10 days.

5. Method as claimed in any one of the preceding claims, **characterised in that** the low electricity level is controlled by controlling the intensity (I) of the electric current to which the storage element (2) is subjected.

6. Method as claimed in any one of the preceding claims, **characterised in that** during the conservation phases, the storage element is subjected to a current (Iₘᵢₙ) of between 2.10⁻⁵ times and 2.10⁻⁴ times the nominal value of the capacity of the storage element (2), the current (I) being expressed in Ampere (A) and the capacity of the storage element being expressed in Ampere.hour (A.h).

7. Method as claimed in claim 6, **characterised in that** during the charging phases, the storage element is subjected to a current (I) of between 10⁻³ times and 4.10⁻³ times the nominal value of the capacity of the storage element (2), the current (I) being expressed in Ampere (A) and the capacity of the storage element being expressed in Ampere.hour (A.h).
